# EUROPEAN PATENT SPECIFICATION

(11) **EP 1 507 047 B1**
(45) Date of publication and mention of the grant of the patent: **18.04.2007**
(21) Application number: 03077581.1
(22) Date of filing: 14.08.2003
(51) Int. Cl.: E04C 2/54

(54) **Extruded honeycomb panel**
Extrudierte Wabenplatte
Panneau extrudé en nid d'abeilles

(43) Date of publication of application: 16.02.2005
(73) Proprietor: Politec Polimeri Tecnici S.A., 6855 Stabio (CH)
(72) Inventor: Conterno, Cosimo, 6850 Mendrisio (CH)
(74) Representative: De Gregori, Antonella

(56) References cited:
- EP-A- 0 150 534
- EP-A- 0 657 280
- CH-A- 689 585
- DE-A- 2 722 817
- US-A- 4 235 658

## Description

The present invention refers to an extruded honeycomb panel, in particular for the field of construction.

Extruded honeycomb panels made from thermoplastic synthetic materials are used to form covers and/or buffering walls in the construction industry, for example for prefabricated products, or in the field of agriculture, for example for greenhouses.

For these applications it is extremely important to reduce the amount of heat transmission through the panel, nevertheless optimising the passage of light.

Panels, generally but not exclusively made from polycarbonate, have a honeycomb structure with inner ribs, arranged according to different angles of incidence with the outer surfaces of the panel, to allow the selective passage of light rays striking the panel.

It is thus possible, for example, to promote the transmission of rays during the winter and to block the transmission of rays during the summer, such rays having different angulations with respect to the panel being used.

Honeycomb panels made from synthetic material can also be coated with a thin reflective anti-aging layer with a stabilising effect with regard to UV rays.

An example of a panel, according to the preamble of claim 1, comprising a polycarbonate structure covered with at least one layer is disclosed in EP-A-657280.

The purpose of the present invention is that of realising an extruded honeycomb panel which reduces the amount of heat transmission through the panel.

Another purpose of the present invention is that of realising a panel which assures an optimal passage of light inside the spaces.

Another purpose of the present invention is that of realising an extruded honeycomb panel which is particularly simple and functional, with low costs.

These purposes according to the present invention are accomplished by realising an extruded honeycomb panel as outlined in claim 1.

Further characteristics are foreseen in the dependent claims.

The characteristics and advantages of an extruded honeycomb panel according to the present invention shall become clearer from the following description, given as an example and not for limiting purposes, referring to the attached schematic drawings, in which:
Figure 1 is a cross section of a part of an extruded honeycomb panel, object of the present invention;

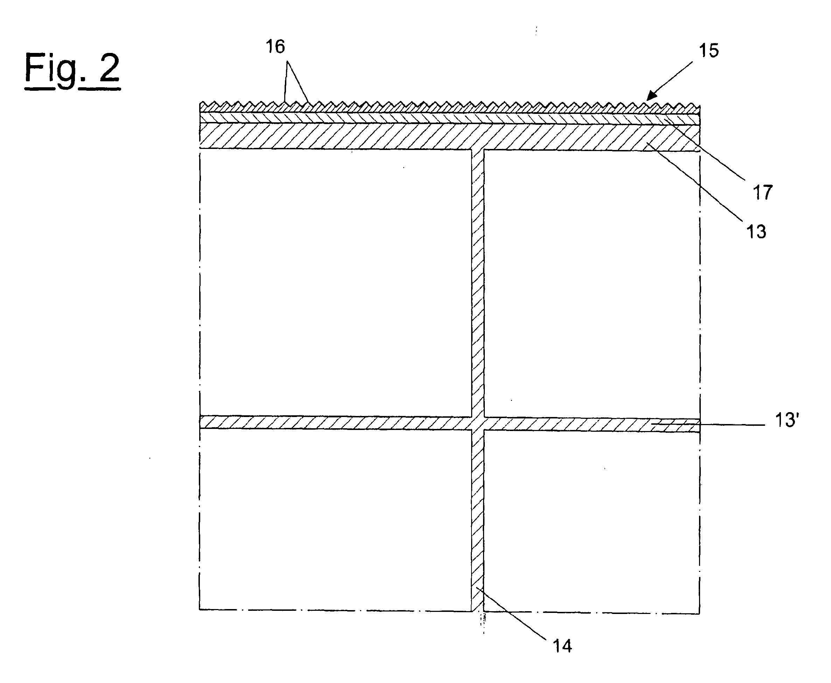

Figure 2 is an enlarged detail of figure 1.

With reference to the figures, an extruded honeycomb panel 10 is shown, in particular for application as covers and/or buffering walls in the construction industry, for example for prefabricated products or for greenhouses.

The honeycomb panel 10 comprises a structure 12 made from thermoplastic synthetic material, made up of two or more flat plates 13 parallel to each other, spaced apart and connected by a plurality of ribs 14 at an angle with respect to such plates 13.

The honeycomb structure 12 can be made from polycarbonate, or else other synthetic materials such as, for example, alloys of thermoplastic materials with chemical-physical characteristics similar to polycarbonate.

To realise the structure 12 homopolymers, copolymers or mixtures of polystyrene, polyacrylate, polypropylene, polyethylene, polyurethane or polyethylene terephthalate can, for example, be used.

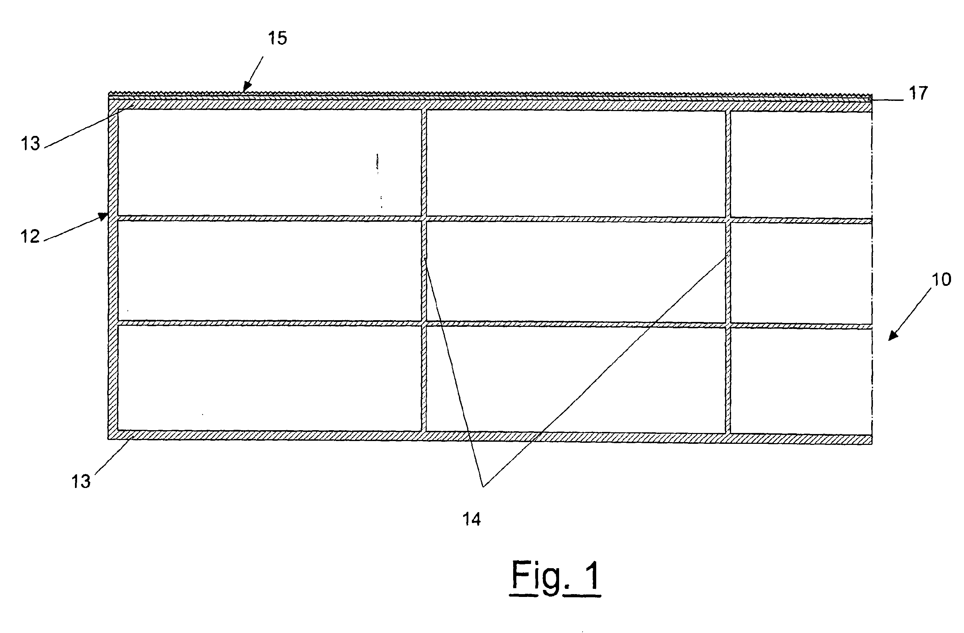

Figure 1 shows, as an example, a panel 10 made up of three layers in which, according to a preferred embodiment, the plates inside the panel 13' are thinner than the outer plates 13.

In the case of panels consisting of just two plates 13, on the other hand, a single-layer panel (not represented) is obtained.

A surface plate of reflective material 15 consisting of a plurality of protruding elements 16 facing each other is coextruded on the outside of an outer plate 13 of the panel 10. The protruding elements, having a triangular cross section, define a surface geometry made up of parallel ridges and troughs.

The coextruded reflective material consists of mineral filler, such as mica, metal or aluminium shavings, dispersed in the base material, for example in polycarbonate.

In a preferred embodiment, a layer of UV-absorbent material 17 is coextruded between the honeycomb structure 12 and the reflective surface layer 15 to limit the aging of the material during exposure to the sun's rays.

Two fundamental factors for making the panel 10, object of the present invention, are the geometric characteristics of the protruding elements with a triangular cross section 16, such as the inclination and the size of the base of such elements 16.The protruding elements with a triangular cross section 16, which could, for example, be of a size in the order of a few millimetres, could be realised with a ratio between base and height of about 1 to 2 and a vertex angle of about 30°.

The protruding elements 16, which according to the invention consist of reflective material, allow effective diffusion of light and more effective reflection of infrared with respect to reflective material deposited in flat layers.

The light rays striking the panel 10, object of the present invention, are thus reflected by the surface layer 15 containing mineral filler, which help to reflect infrared, determining a consequent substantial reduction in the heat transmitted by the panel being used towards the space below and also substantially reducing the heating of the structure itself 12.

Moreover, the surface geometry with ridges and troughs of the outer surface of the panel, acts upon the incident light rays like a prism, thus causing the diffusion thereof and consequently determining a greater passage of light inside the space below.

The extruded honeycomb panel object of the present invention has the advantage of reducing the amount of transmission of heat through the panel, reflecting a greater percentage thereof with respect to conventional panels and improving the diffusion of light.

These two aspects, besides ensuring more comfortable living conditions, give a substantial energy saving for the conditioning of rooms and less use of artificial light.

Above all, for use in the field of agriculture for greenhouse construction, the panel, object of the present invention, advantageously allows more efficient control of the temperature inside.

The honeycomb panel 10, object of the present invention, is advantageously intended for vertical or very inclined applications. This type of positioning does not, indeed, allow the deposit of dust and/or foreign particles on the outer plate. Therefore periodic cleaning of the surface layer is not necessary.

## Claims

1. Extruded honeycomb panel comprising a structure (12) made from thermoplastic synthetic material made up of at least two flat plates (13) parallel to each other, spaced apart and connected by a plurality of ribs (14) at an angle with respect to said at least two plates (13), as well as a layer of reflective material coextruded on the outside of at least one of said plates (13) said layer of reflective material (15) consisting of mineral filler dispersed in said synthetic material of said panel (10) **characterised in that** said layer of reflective material (15) consists of a plurality of protruding elements (16) next to each other which define a surface geometry made up of parallel ridges and troughs.

2. Panel according to claim 1, **characterised in that** said protruding elements (16) have a triangular cross section.

3. Panel according to claim 2, **characterised in that** said protruding elements (16) with a triangular cross section have a ratio between base and height of about 1 to 2 and a vertex angle of about 30°.

4. Panel according to claim 1, **characterised in that** said mineral filler consist of mica, metal or aluminium shavings.

5. Panel according to claim 1, **characterised in that** it is equipped with a coextruded layer of UV ray-absorbent material (17).

6. Panel according to any one of the previous claims, **characterised in that** said thermoplastic synthetic material is polycarbonate.

## Patentansprüche

1. Extrudiertes Wabenpaneel mit einer aus thermoplastischem synthetischen Material hergestellten Struktur (12), das aus mindestens zwei flachen Platten (13), die parallel zueinander liegen, voneinander beabstandet sind und durch eine Vielzahl von Rippen (14) unter einem Winkel in Bezug auf die mindestens zwei Platten (13) verbunden sind, sowie einer Schicht aus reflektierendem Material hergestellt ist, die auf die Außenseite von mindestens einer der Platten (13) koextrudiert ist, wobei die Schicht aus reflektierendem Material (15) aus einem Mineralfüllstoff besteht, das in dem synthetischen Material des Paneels (10) verteilt ist,
**dadurch gekennzeichnet, dass**
die Schicht aus reflektierendem Material (15) aus einer Vielzahl von vorstehenden Elementen (16) nebeneinander besteht, die eine Oberflächengeometrie definieren, die aus parallelen Stegen und Mulden gebildet ist.

2. Paneel nach Anspruch 1,
**dadurch gekennzeichnet, dass**
die vorstehenden Elemente (16) einen dreieckigen Querschnitt aufweisen.

3. Paneel nach Anspruch 2,
**dadurch gekennzeichnet, dass**
die vorstehenden Elemente (16) mit einem dreieckigen Querschnitt ein Verhältnis zwischen Basis und Höhe von etwa 1 bis 2 und einen Scheitelwinkel von etwa 30° aufweisen.

4. Paneel nach Anspruch 1,
**dadurch gekennzeichnet, dass**
der Mineralfüllstoff aus Glimmer-, Metall- oder Aluminiumspänen besteht.

5. Paneel nach Anspruch 1,
**dadurch gekennzeichnet, dass**
es mit einer koextrudierten Schicht aus UV-Strahlen absorbierendem Material (17) ausgestattet ist.

6. Paneel nach einem der vorhergehenden Ansprüche,
**dadurch gekennzeichnet, dass**
das thermoplastische synthetische Material Polycarbonat ist.

## Revendications

1. Panneau extrudé en nid d'abeilles comprenant une structure (12) faite d'un matériau synthétique thermoplastique et constituée d'au moins deux plaques plates (13) parallèles entre elles, espacées et reliées par une pluralité de nervures (14) formant un angle par rapport auxdites au moins deux plaques (13), ainsi qu'une couche de matériau réfléchissant coextrudé sur l'extérieur d'au moins l'une desdites plaques (13), ladite couche de matériau réfléchissant (15) étant constituée d'une charge minérale dispersée dans ledit matériau synthétique dudit panneau (10), **caractérisé en ce que** ladite couche de matériau réfléchissant (15) consiste en une pluralité d'éléments saillants (16) côte à côte qui définissent une géométrie de surface constituée d'arêtes et de canaux parallèles.

2. Panneau selon la revendication 1, **caractérisé en ce que** lesdits éléments saillants (16) sont de section triangulaire.

3. Panneau selon la revendication 2, **caractérisé en ce que** lesdits éléments saillants (16) de section triangulaire ont un rapport de la base par rapport à la hauteur d'environ 1 à 2 et un angle de sommet d'environ 30°.

4. Panneau selon la revendication 1, **caractérisé en ce que** ladite charge minérale est constituée de copeaux de mica, de métal ou d'aluminium.

5. Panneau selon la revendication 1, **caractérisé en ce qu'**il est équipé d'une couche de matériau absorbant les UV coextrudée (17).

6. Panneau selon l'une quelconque des revendications précédentes, **caractérisé en ce que** ledit matériau synthétique thermoplastique est du polycarbonate.
